Europäisches Patentamt

(19) European Patent Office

Office européen des brevets

(11) Publication number: **0 123 887**
A2

(12) **EUROPEAN PATENT APPLICATION**

(21) Application number: **84103226.1**

(22) Date of filing: **23.03.84**

(51) Int. Cl.³: **B 23 C 5/10**, B 23 C 5/22

(30) Priority: **29.04.83 IT 2087583**
**10.02.84 IT 2080884 U**

(43) Date of publication of application: **07.11.84**
**Bulletin 84/45**

(84) Designated Contracting States: **AT BE CH DE FR GB LI LU NL SE**

(71) Applicant: **NOUVA CA.ME.S. S.p.A., Via Corrado II Salico 50, I-20141 Milano (IT)**

(72) Inventor: **Garcea, Giovanni, Piazza San Sepolcro 1, I-20123 Milano (IT)**

(74) Representative: **Lecce, Giovanni, Ufficio Internazionale Calciati S.r.l. Via G. Negri 10, I-20123 Milano (IT)**

(54) Device for fixing the cutting insert to the support in a sectional milling cutter.

(57) The cutting insert 4 of a sectional milling cutter is fixed between two surfaces respectively of the support 2 and the fixing bracket, by means of a socket head screw 13. So as to position insert 4 rapidly and precisely, with constant cutting profile, the face 2' of the support is equipped with two surface plates 8 and 8' which project and converge together at an angle of approx. 75°. In correspondence, the cutting insert 4 has seats or apertures 6 and 6', forming a wedge which has an aperture angle equal to that of the planes 8 and 8' so that they can be coupled perfectly.

The cutting insert 4 has an elliptical profile with two cutting surfaces 5 and 5' and with two apertures or seats 6 and 6' which are placed opposite each other and are superimposed by rotating the insert around the two respective transverse axes.

On the apex of one of the two apertures 6 acts and presses the extremity 9' of the arc surface 9 which delimits the surface plate 2' and which extends parallel to the cutting surface 5 or 5'.

0123887

## DEVICE FOR FIXING THE CUTTING INSERT TO THE SUPPORT IN A SECTIONAL MILLING CUTTER

The present invention refers to a device for fixing the cutting insert to the support in a sectional milling cutter.

As is well known, a milling cutter is a rotating tool equipped with one or more cutting inserts, shaped according to a flat surface or of revolution around the axis of the tool and fixed in one or more seats cut into the support.

The cutting inserts generally consist of brazed plates which, during use, must be removed for regrinding and subsequently positioned and fixed in the housing on the support.

The particular demands made on the working tolerance of the mechanical pieces require the maximum precision in execution and, consequently, the maximum precision and constancy in the cutting profile of the inserts. Therefore, because of the reduction in the diameter of the cutting inserts due to regrinding, the repositioning of same in the housing on the support is a long and laborious operation in order to obtain an accurate and precise adjustment.

Besides, this repositioning operation does not always allow satisfactory results to be obtained.

The purpose of this invention is to remedy these drawbacks.

0123887

- 2 -

More particularly, the purpose of this invention is to provide a device which allows the cutting insert to be fixed in the housing on the support of a sectional milling cutter, in a rapid and precise way and with a constant cutting profile.

Another purpose of the present invention is to provide a device which allows the cutting insert to be fixed, rapidly and precisely, in the housing on the support during the repositioning of the insert, as a result of its having been removed.

According to this invention, these and other purposes are achieved by providing the support surface, on which the cutting insert bears, with two perimeter surface plates which project and are perpindicular to said face and are equal in height to the cutting insert and converge towards each other at a convex angle, and by cutting into the cutting insert, two seats (or apertures) defined by planes converging to a wedge. These are complementary to and match the said surface plates. Preferably, the angle formed between the two converging surface plates should be about 75° and one of the two surface plates is parallel and decentered in relation to the milling cutter axis.

The cutting insert is a blade with elliptical profile which has two opposed cutting surfaces and provided with two wedge-shaped seats or apertures opposite to each other and with an aperture angle equal to that formed between the two surface plates.

The two cutting surfaces and the two seats of the cutting insert can be superimposed by rotating the insert round the two respective transverse axes passing through the centre. The support surface on which the cutting insert rests is delimited by a an arc-shaped area which runs parallel to the profile of the cutting insert, but with a greater radius so as to enclose said cuting insert without touching it. The free extremity of said arc-shaped area has a smaller curvature radius so as to touch an apex of the wedge-shaped apeture of the cutting insert.

When assembling, one of the two wedge shaped seats (or apertures) of the cutting insert is inserted and accurately juxtaposed in the two projecting surface plates of the support, while the free extremity of the arc-shaped area meets the apex of the wedge-shaped opening of the cutting insert, opposite to the one inserted and exerts on said insert, an elastic thrust with a centering effect. A bracket placed above the cutting insert and fixed to the support by means of screws, pins, socket head screws, etc. keeps the insert blocked in the support seat.

With the purpose of further improving the operation of positioning and adjusting the cutting insert in the support seat, especially for heavy duty milling cutters, under this invention, the two extremities of the fixing bracket are provided with ridged projections and in correspondence, the support and the cutting insert

have corresponding hollows of the same form as the projections and capable of receiving them during the assembly.

Even if the hollow in the cutting insert can be of any shape, in practice it is preferable for it to be concave with cylindrical surfaces and the corresponding bracket projection to be convex with an equal curvature radius so that their surfaces meet and juxtapose perfectly when assembled. The particular form of the hollow allows the cutting insert to be placed in the correct position as it is guided by the curvature of the bracket projection.

The hollow of the support can be any shape even if a flat surface form with a square or rectangular profile is preferred. In the latter case, naturally, the bracket projection has the same square or rectangualar form so as to meet perfectly and juxtapose to form a single whole.

The hollow of the cutting insert is nicked in correspondence with the crossing point of the two transverse rotation axes so as to act as guide for both cutting surfaces of the insert.

For a better understanding of the constructional and functional characteristics of the present device for fixing the blade insert in a milling cutter, some preferable forms of realization which examplify but are not restrictive, are described in detail below. They refer to the attached drawings where:

figure 1 is a plan view of one form of realizing the device which is the subject of the present invention;

figure 2 is the front view of the device according to figure 1;

figure 3 is the exploded view of the device according to figures 1 and 2 above;

figure 4 is the plan view of another form of realizing the device which is the subject of the present invention;

Figure 5 represents the schematic view of a transverse section of the device in figure 4 and

figure 6 represents the enlarged plan of the cutting insert used in the device in figures 4 and 5.

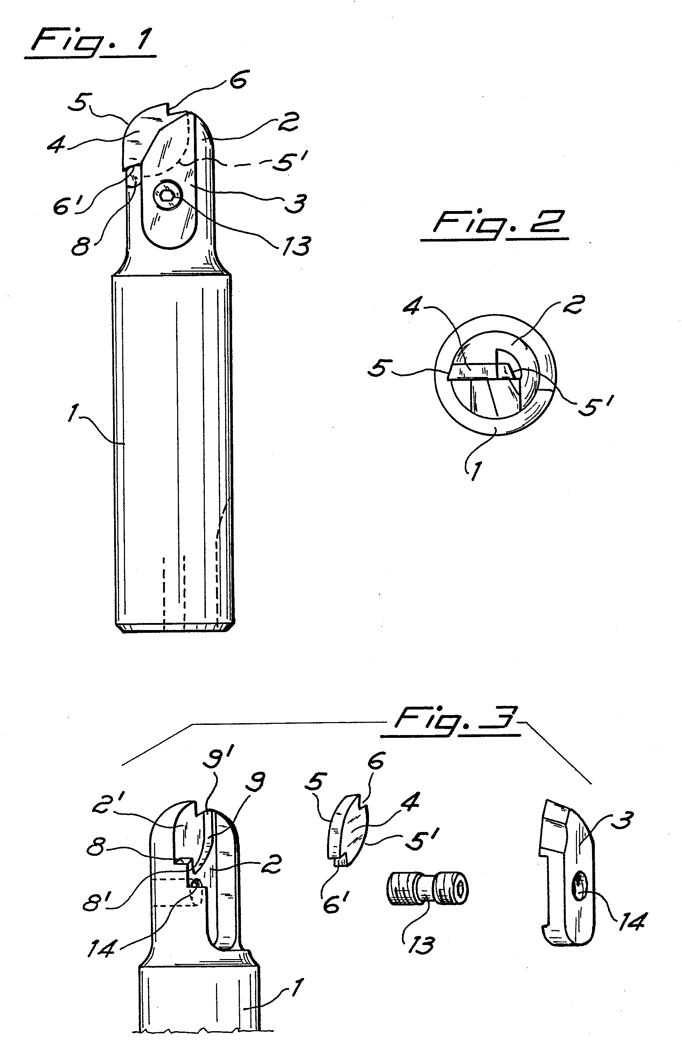

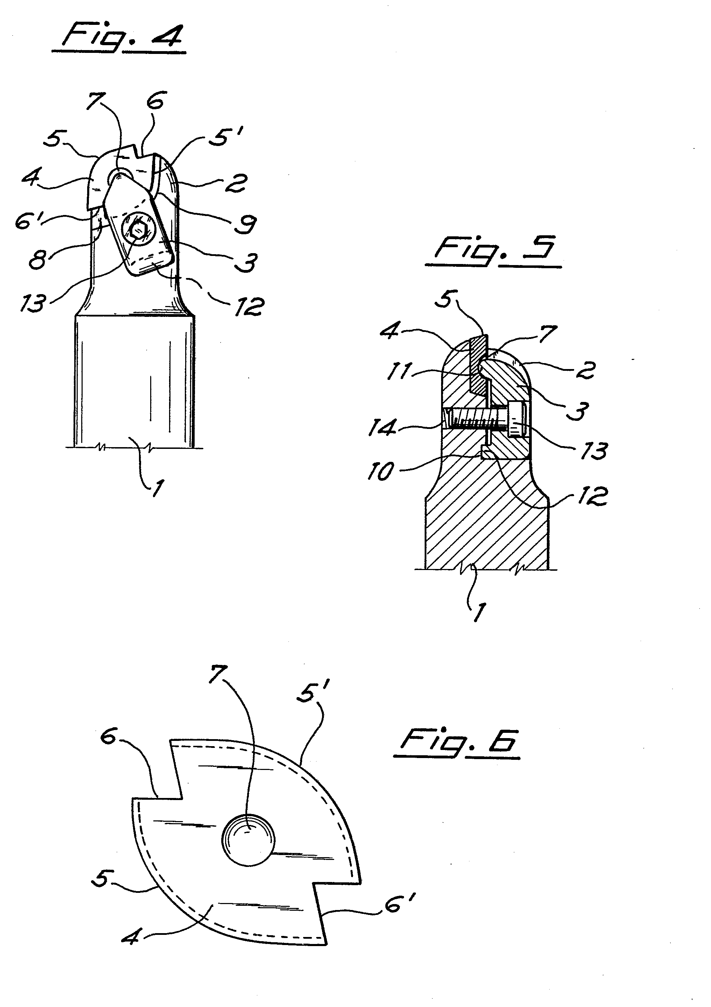

With reference to figures 1 - 3, the device which is the subject of the present invention includes: the shaft 1 of a milling cutter, a support 2, a cutting insert 4 and a fixing bracket 3.

The cutting insert 4 is a blade with elliptical profile which has two opposite cutting surfaces of 5 and 5' and two seats (apertures) 6 and 6' and converging to form a wedge with an aperture angle of approx. 75°. Said cuting surfaces 5 and 5' and said seats 6 and 6' can be superimposed by rotating insert 4 on the two rotation axes which pass through the centre.

The external arc of each cutting surface 5 and 5' determines the generating line of a spherical or a rotation profile seat to be obtained on the piece worked. Because of the particular working requirements already mentioned, this profile must be kept within a strict tolerance and it must be highly efficient and trustworthy under the working stresses. Therefore insert 4 must be securely and easily positionable and must have the part used for locking identical to the cutting profile so that it can be used twice. This condition is fulfilled by making the two 5 and 5' cutting profiles so that they can be perfectly superimposed by double rotation on the insert rotation axes which pass through the centre.

To fix insert 4 on the support 2 of a milling cutter, a 2' face is cut on the latter on which the face of the insert 4 is laid.

Said support face 2' has two 8 and 8 perimeter surface plates which project and are perpendicular to said face and are of equal height to the insert 4 and converge together at a recrprocal angle of about 75°. The angle formed between said surface plates 8 and 8' is equal to the aperture or seat 6 and 6' of insert 4, so that one of the 6 and 6' apertures of the insert is positioned and juxtaposed on said, suitably rectified, plates. One of the two surface plates 8 and 8 is preferably parallel to and decentered in relation to the tool axis to give perfect radial positioning.

The plate 2' is, besides, equipped with and delimited by an arc-shaped surface 9 whose profile is parallel to that of the cutting surfaces 5 and 5', but with a wider curvature radius so as to include the insert with out touching said cutting surfaces. The curvature of surface 9 lessens towards the extremity 9' so that it

0123887

- 7 -

couples with the apex of the seat 6 of the cutting insert 4 and exerts a slight pressure. In this way an extremely accurate locking is obtained of the insert 4 on the two surface plates 8 and 8', thrust by the reaction of the lesser curved extremity 9'. The coupling between the apex of the seat 6 and the surface 9' only takes place on the upper edge of the cutting insert 4, so the extraction is facilitated.

The cutting insert 4, thus positioned in the seat, is kept locked by a mobile bracket 3 which is fixed by a socket head screw or a screw 13, screwed into the threaded seat 14 made in the support body 2 and/or the bracket 3.

Figures 4-6 illustrate a variation of the device which is the subject of the present invention. Here the cutting insert 4 has a hollow 4, preferibly of concave form and corresponding to the crossing point of the two rotation axes.

Also, the support 2 has a hollow 10, preferably having flat surfaces and a square or rectangular shape.

In correspondence, the fixing bracket 3 has, at its extremities, notched extensions or projections 11 and 12 respectively, whose shapes correspond perfectly, the first 11 to the hollow 7 and the second 12 to the hollow 10. Said fixing bracket 3 is placed with the two projections, 11 and 12, inserted in the respective hollows, 7 and 10 and fixed using screws or socket head screws.

- 8 -

For assembly, cutting insert 4 is placed on the plane 2' of the support of the support 2 in such a way that one of the seats 6' is inserted and juxtaposed in the two surface plates 8 and 8' and a cutting surface 5' is placed parallel to the arc-shaped surface 9. The extremity 9' of the surface 9 meets the apex of the aperture 6 and exerts an elastic thrust which has a centering effect. Afterwards, the fixing bracket 3 is placed so that the projection 11 is inserted in the hollow 7 of the insert 4 and that the projection 12 is inserted in hollow 12 of support 2. Having inserted screw 13 in the through hole of bracket 3, said screw is tightened in the threaded seat 14. As the screw 13 is tightened, the cutting insert 4 is guided by the projection 11, which acts on the walls of the hollow 7 and places them in the perfectly keyed, correct position. Naturally, when the cutting profile 5 becomes blunted, the insert 4 can be removed and turned, repeating the above operations. What has been said demonstrates the extreme simplicity which distinguishes the present device and the rapid and precise way in which the cutting insert can be placed in the support seat during the repositioning stage.

In the practical realization of the present invention; changes, modifications and variations can be made to the device illustrated in the drawings, within the spirit of the present invention and without leaving its protective range.

0123887

## CLAIMS

1. Device for fixing the cutting insert in the support of a sectional milling cutter, including a cutting insert, a support provided with a face for said cutting insert and a fixing bracket, characterized by the fact that:

a) said plate has two perimeter surface plates which project and are perpendicular to said face, and are equal in height to the cutting insert and converge together at a convex angle, and an arc-shaped surface which delimits said plate and which has a curvature radius greater than the profile of the cutting insert; and b) the cutting insert is provided with seats or apertures defined by planes converging to a wedge which are complementary to and can be mated to said surface plates.

2. Device according to the claim 1, where the angle formed between the two converging surface plates is aprox. 75° and one of the two planes is parallel to and decentered inrelation the axis of the tool.

3. Device according to the claims 1 and 2, where the cutting insert has an elliptical profile with two opposite cutting surfaces and two opposing apertures which are delimited by planes converging to a wedge with an aperture angle of approx. 75°. Said cutting surfaces and said apertures can be superimposed by rotating the insert around the two transverse axes which pass through the centre.

0123887

- 10 -

4. Device under any of the previous claims where the free extremity of the arc surface has a smaller radius of curvature than the remaining part so that it meets the apex of the wedge-shaped aperture of the cutting insert, opposite to that inserted in the surface plates.

5. Device under any of the previous claims where the fixing bracket, at its two extremities, has; notched projections or extensions, and the support and the blade insert have corresponding ridges of an exactly equal form to the corresponding projections and capable of receiving them during assembly.

6. Device under claim 5 where the hollow of the cutting insert concave and the corresponding bracket projection is convex with an equal curvature radius so that their surfaces meet and juxtapose perfectly when assembled together.

7. Device according to claims 5 and 6, where the cutting insert hollow is made in correspondence with the crossing point of the two rotation axes.

8. Device according to any one of the preceding claims from 5 to 7, having the support hollow has flat planes with a square or rectangular section and the corresponding bracket projection is of a square or rectangular shape with side or sides equal to those of the hollow so that they meet and juxtapose perfectly when assembled together.

*Fig. 1*

*Fig. 2*

*Fig. 3*

_Fig. 4_

_Fig. 5_

_Fig. 6_